(19) Europäisches Patentamt
European Patent Office
Office européen des brevets

(11) EP 3 369 711 B1

(12) # EUROPEAN PATENT SPECIFICATION

(45) Date of publication and mention of the grant of the patent:
**12.08.2020 Bulletin 2020/33**

(21) Application number: **16859743.3**

(22) Date of filing: **24.10.2016**

(51) Int Cl.:
***B63B 13/00** (2006.01)* ***B63J 4/00** (2006.01)*
***C02F 1/68** (2006.01)* ***C02F 1/76** (2006.01)*
***B01F 15/00** (2006.01)* *B01F 1/00 (2006.01)*

(86) International application number:
**PCT/JP2016/081436**

(87) International publication number:
**WO 2017/073513 (04.05.2017 Gazette 2017/18)**

(54) **BALLAST WATER TREATMENT APPARATUS AND BALLAST WATER TREATMENT METHOD**

BALLASTWASSERAUFBEREITUNGSVORRICHTUNG UND BALLASTWASSERAUFBEREITUNGSVERFAHREN

APPAREIL DE TRAITEMENT D'EAU DE BALLAST ET PROCÉDÉ DE TRAITEMENT D'EAU DE BALLAST

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2015 JP 2015211655**

(43) Date of publication of application:
**05.09.2018 Bulletin 2018/36**

(73) Proprietor: **Kuraray Co., Ltd.**
**Kurashiki-shi, Okayama 710-0801 (JP)**

(72) Inventor: **TAJIMA, Yasuhiro**
**Osaka-shi**
**Osaka 530-8611 (JP)**

(74) Representative: **Vossius & Partner**
**Patentanwälte Rechtsanwälte mbB**
**Siebertstrasse 3**
**81675 München (DE)**

(56) References cited:
**WO-A1-2007/000238**
**WO-A1-2012/124039**
**WO-A1-2012/124039**
**DE-U1-202013 008 061**
**JP-A- H10 263 555**
**JP-A- 2009 285 523**
**JP-A- 2010 179 304**
**JP-A- 2011 098 269**
**JP-A- 2013 099 969**
**JP-A- 2013 099 969**
**JP-A- 2015 016 761**
**KR-A- 20140 085 028**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 369 711 B1

## Description

### Technical Field

The present invention relates to a ballast water treatment apparatus and a ballast water treatment method.

### Background Art

Conventionally, it has been known to fill a ballast tank arranged in a vessel such as freighter with seawater serving as ballast water, in order to stabilize the vessel when the vessel carries no cargo. The seawater utilized as the ballast water contains many microorganisms and germs. Thus, when being discharged from a vessel which travels between countries, the ballast water is subjected to sterilizing treatment to thereby prevent an influence caused by the microorganisms and germs to the marine ecosystem.

There is a way of putting chemicals into ballast water, radiating ultraviolet rays thereto or the like for sterilizing the ballast water. An apparatus disclosed in Japanese unexamined patent publication No. 2012-254402 (Patent Literature 1) to be described below includes a bypass pipe connected to an intermediate position of a main pipe connected to a ballast tank and a sterilizing agent supply device containing a sterilizing agent and disposed in the bypass pipe. In this apparatus, a part of raw water flowing in the main pipe is caused to flow into the bypass pipe. Then, the sterilizing agent having been placed in the bypass pipe in advance dissolves into the raw water flowing in the bypass pipe to thereby obtain a sterilizing agent solution. The sterilizing agent solution rejoins the raw water flowing in the main pipe to sterilize the ballast water.

In the apparatus disclosed in Patent Literature 1, an amount of the ballast water having been drawn in the vessel is caused to pass through the sterilizing agent supply device containing the sterilizing agent in advance to thereby supply a sterilizing component to the ballast water. After that, the ballast water containing the sterilizing component fills the ballast tank.

However, in the apparatus disclosed in Patent Literature 1, it is difficult to estimate a time period required to complete the filling of the ballast water. For example, the temperature and the quality of the seawater to be drawn in the vessel are an unstable. Hence, a dissolution behavior of the sterilizing agent into the seawater tends to vary. Specifically, the sterilizing agent dissolves into the seawater immediately after being placed therein when the temperature of the seawater to be drawn in the vessel is high, which results in an excessive increase in a concentration of the sterilizing component in the ballast water. To the contrary, the sterilizing agent does not fully dissolve in the seawater in a time after being placed therein when the temperature of the seawater is low, which results in an insufficient concentration of the sterilizing component in the ballast water. In the former case, it is necessary to increase the drawing rate of the seawater to thereby suppress the excessive concentration of the sterilizing component. In the latter case, it is necessary to decrease the drawing rate of the seawater to thereby ensure a sufficient time to dissolve the sterilizing agent. Furthermore, a large amount of the sterilizing component is required when the quality of the seawater is bad, but such a large amount of the sterilizing component is not required when the quality of the seawater is good.

The temperature and the quality of the seawater to be drawn in the vessel differ depending on places or seasons. Therefore, it is difficult to calculate and put a suitable amount of the sterilizing agent in advance in the sterilizing agent supply device disclosed in Patent Literature 1. For example, there have been problems: an excessive amount of the sterilizing agent results in remaining partially undissolved; an excessive dissolution of a sterilizing component from the sterilizing agent results in an extremely high concentration of the sterilizing component; and a smaller amount of the sterilizing agent involves an insufficient sterilization of the ballast water.

Moreover, in the sterilizing agent supply device disclosed in Patent Literature 1, if the sterilizing agent remains undissolved in the device when filling the ballast tank with the water is completed, the sterilizing agent supply device cannot be removed from the bypass pipe and the undissolved sterilizing agent stays in contact with the seawater (ballast water) in the bypass pipe. Therefore, even after the drawing of the seawater is stopped subsequently of the completion of the filling, the sterilizing component continues to dissolve from the remaining sterilizing agent into the seawater (ballast water) in the bypass pipe. As a result, the concentration of the sterilizing component in the bypass pipe unexpectedly increases, which causes a negative influence to the sterilizing agent supply device and the bypass pipe.

When the undissolved sterilizing agent is a chlorinated sterilizing agent, a part of the sterilizing agent is likely to decompose, which decreases the concentration of effective chlorine, or generate a toxic chlorine gas. Besides, when the undissolved sterilizing component is a chlorine component, corrosion is likely to occur in the water treatment apparatus due to the chlorine component. Patent Literature 2 and Patent Literature 3 disclose other ballast water treatment apparatuses and methods.

## Citation List

### Patent Literature

Patent Literature 1: Japanese Unexamined Patent Publication No. 2012-254402,
Patent Literature 2: JP 2013 099969 A, Patent Literature 3: WO2012/124039.

## Summary of Invention

An object of the present invention is to provide a ballast water treatment apparatus which makes it possible to easily adjust a concentration of a sterilizing component in ballast water to fall within a desired range.

A ballast water treatment apparatus according to one aspect of the present invention is described in claim 1. A ballast water treatment method according to the present invention is described in claim 6. Optional features of the invention are described in the dependent claims.

The present invention can provide a ballast water treatment apparatus which makes it possible to easily adjust a concentration of a sterilizing component in ballast water to fall within a desired range.

## Brief Description of Drawings

FIG. 1 is a schematic view showing a configuration of a ballast water treatment apparatus according to the embodiment 1 of the present invention.
FIG. 2 is a schematic view showing a cross section of a sterilizing agent supply unit in the embodiment 1.
FIG. 3 is a schematic view showing a configuration of a modified ballast water treatment apparatus in which a concentration detector is attached at a changed position from the embodiment 1.
FIG. 4 is a schematic perspective view showing a modified sterilizing agent supply unit for the embodiment 1.
FIG. 5 is a cross sectional view of the view of FIG. 4.
FIG. 6 is a schematic view showing a configuration of a ballast water treatment apparatus according to a comparative example 1.

## Description of Embodiments

Hereinafter, an embodiment of the present invention will be described with reference to the accompanying drawings.

(Embodiment 1)

[Ballast water treatment apparatus]

A configuration of a ballast water treatment apparatus 1 according to an embodiment 1 of the present invention will be described with reference to FIG.1.

The ballast water treatment apparatus 1 is arranged in a vessel to sterilize ballast water drawn in the vessel and guide the sterilized ballast water to a ballast tank 60 disposed in the vessel. The ballast water treatment apparatus 1 mainly comprises a ballast pipe 11, a ballast pump 10, a filtration device (filter) 20, a sterilizing agent supply unit 30, a supply pipe 36, a flow rate detector 41, a concentration detector 42, a mixer 50 and a controller 70.

The ballast pipe 11 is connected to the ballast tank 60, and serves as a supply passage for guiding seawater drawn in the vessel to the ballast tank 60. The ballast pipe 11 has one pipe opening through which the seawater enters and the other pipe opening connected to the ballast tank 60. Raw water (generally, called as "seawater") to be the ballast water enters the ballast pipe 11 from the one pipe opening, flows in the ballast pipe 11 toward the other pipe opening, and reaches the ballast tank 60. The raw water (seawater) is stored in the ballast tank 60 as the ballast water to keep a balance of the body of the vessel. Hereinafter, the raw water (seawater) having drawn to flow in the ballast pipe 11 will be also referred to as "ballast water".

The ballast pump 10 lies on the ballast pipe 11 at a position closer to the one pipe opening thereof, and supplies the ballast water having entered the ballast pipe 11 to the ballast tank 60.

The filtration device 20 lies on the ballast pipe 11 at a downstream position (closer to the ballast tank 60) of

the ballast pump 10 in a flow direction of the ballast water. The filtration device 20 removes impurities and microorganisms contained in the seawater by means of filtration. The filtration device 20 is preferably arranged at an upstream position of the sterilizing agent supply unit 30. Owing to this arrangement, the seawater (ballast water) having passed through the filtration device 20 has a decreased turbidity and an improved quality, and thus allows a sterilizing agent to stably dissolve thereinto. The filtration device 20 may be arranged at an upstream position of the ballast pump 10.

The flow rate detector 41 lies on the ballast pipe 11 at a downstream position of the filtration device 20, and detects a flow rate of the ballast water (seawater) flowing in the ballast pipe 11. The arrangement of the flow rate detector 41 is not limited to the downstream position of the filtration device 20, but may be an upstream position thereof, or may be a downstream position of the mixer 50. Information of the flow rate detected by the flow rate detector 41 is sent to the controller 70 to be described later.

The sterilizing agent supply unit 30 locates away from the ballast pipe 11, and is connected to the ballast pipe 11 via the supply pipe 36 at a downstream position of the filtration device 20. As shown in FIG. 2, the sterilizing agent supply unit 30 includes a plurality of containers 31 separated from each other by partitions to thereby form a grid shape when seen from the top, and is configured to put a suitable amount of the sterilizing agent from each of the containers in the ballast pipe 11.

Each of the containers 31 has substantially the same internal capacity, and is provided with a bottom plate 34 which is openable and closable at the bottom thereof. The container 31 is filled with a sterilizing agent 33 in order to keep constant amount of the sterilizing agent 33 suitable for one supply. The constant amount of the sterilizing agent 33 falls from the container 31 by opening the bottom plate 34. The sterilizing agent 33 having fallen from the container 31 is supplied into the ballast pipe 11 via the supply pipe 36 by means of absorption into a flow of the ballast water. In other words, the sterilizing agent 33 is kept from coming into contact with the ballast water while being contained in the container 31, and is placed in the ballast water only when the bottom plate 34 is opened. The controller 70 to be described later controls the bottom plate 34 of the container 31 to open at a predetermined time interval. This control makes it possible to supply the constant amount of the sterilizing agent per unit time to the ballast pipe 11 via the supply pipe 36 in accordance with a flow rate of the ballast water flowing in the ballast pipe 11.

It should be noted that the expression "supply the constant amount of the sterilizing agent per unit time" does not limit the supply way to a particular supply way as far as the sterilizing agent supply unit 30 supplies constant weight of the sterilizing agent to the ballast pipe 11 per unit time during the ballast water treatment. For example, the sterilizing agent supply unit 30 may supply 30g of the sterilizing agent to the ballast pipe 11 in the interval of 5 minutes, or may supply 0.1g of the sterilizing agent to the ballast pipe 11 in the interval of 1 second.

The term "unit time" in the expression of "constant weight of the sterilizing agent per unit time" is set in accordance with a capacity of a ballast tank, a flow rate of the ballast water flowing in the ballast pipe 11, a required concentration of a sterilizing component and an effective concentration of chlorine in the sterilizing agent. For example, when the unit time is set to 1 minute, constant weight of the sterilizing agent is supplied to the ballast pipe 11 in the interval of 1 minute. As the unit time is shorter, it is possible to more uniformly supply the sterilizing agent to the ballast pipe 11, and further stabilize the concentration of the sterilizing component in the ballast water. In other words, it is more preferable to successively supply 0.1 g of the sterilizing agent to the ballast pipe 11 at the interval of 1 second than in the case that 6g of the sterilizing agent is supplied to the ballast pipe 11 in the interval of 1 minute. The unit time is preferably set to 10 minutes or less, more preferably to 5 minutes or less, further more preferably to 3 minutes or less and particularly more preferably to 1 minute or less. Guiding of the sterilizing agent to the ballast pipe 11 in the aforementioned manner can contributes to elimination of microorganisms and germs existing in the ballast water.

The supply pipe 36 connects the portion of the ballast pipe 11 at downstream of the filtration device 20 and the sterilizing agent supply unit 30, and supplies the sterilizing agent 33 in the sterilizing agent supply unit 30 to the ballast pipe 11. In the embodiment, sterilizing agent is supplied from the sterilizing agent supply unit 30 to the ballast pipe 11 via the supply pipe 36, but the supply pipe 36 is not required necessarily. For example, the sterilizing agent supply unit 30 may be connected to the ballast pipe 11. In a configuration where the sterilizing agent supply unit 30 is directly connected to the ballast pipe 11, a connection portion of the sterilizing agent supply unit 30 to the ballast pipe 11 (i.e., a leading end of the sterilizing agent supply unit 30) is appreciated to have a shape tapering toward the ballast pipe and a smaller inner diameter than the ballast pipe 11. The sterilizing agent supply unit 30 having this shape can keep the ballast water flowing in the ballast pipe 11 from entering the inside thereof. The inner diameter of the leading end of the sterilizing agent supply unit 30 is preferably 1/5 or less of the inner diameter of the ballast pipe 11, or more preferably 1/10 or less thereof.

In this case, the expression of "the sterilizing agent supply unit supplies the sterilizing agent to the ballast pipe" means a state that the sterilizing agent supply unit 30 provided independently from the ballast pipe 11 supplies the sterilizing agent to the ballast pipe 11, but excludes a state that the sterilizing agent supply unit is provided in the ballast pipe 11. In other words, the sterilizing agent supply unit 30 is required to suitably supply the sterilizing agent 33 which is kept dry to the ballast pipe 11 at a constant time interval while the ballast tank is filled with the water, but not to supply the sterilizing component to the ballast tank by placing a predetermined amount of the sterilizing agent 33 in the ballast

pipe 11 in advance such that the sterilizing component dissolves into the ballast water in accordance with the filling of the water.

The ballast pipe 11 has a sufficiently larger inner diameter than the supply pipe 36. For example, the inner diameter of the supply pipe 36 is preferably 1/5 or less of the inner diameter of the ballast pipe 11, and more preferably 1/10 or less thereof. This configuration makes it possible to prevent the ballast water flowing in the ballast pipe 11 from entering the sterilizing agent supply unit 30 via the supply pipe 36.

The sterilizing agent 33 should not be particularly limited as far as it effectively acts on marine microorganisms and marine germs. For example, it is appreciated to use a chemical compound which generates hypochlorous acid. The chemical compound which generates hypochlorous acid involves calcium hypochlorite, chlorinated isocyanurate and the like. For example, it is appreciated to use dichloroisocyanurate and/or trichloroisocyanuric acid as the chlorinated isocyanurate.

The chlorinated isocyanurate is a chemical compound having a structure obtained after a hydrogen atom coupled to a nitrogen atom of isocyanuric acid is replaced with a chlorine atom, and includes the trichloroisocyanuric acid (shown by Structrual Formula (1) below) in which three chlorine atoms replace corresponding hydrogen atoms, and dichloroisocyanurate (shown by Structural Formula (2) below, i.e., an exemplary representative of sodium dichloroisocyanurate) in which two chlorine atoms replace corresponding hydrogen atoms. Each of the chlorinated isocyanurate generates the hypochlorous acid (HOCl) which exerts sterilization by dissolving into water.

[Chemical Structural Formula 1]

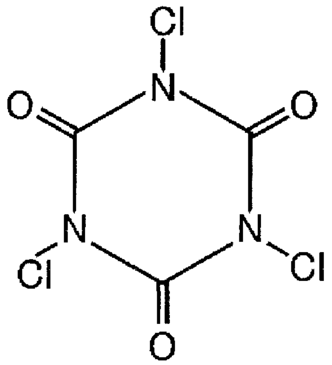

··· (1)

[Chemical Structural Formula 2]

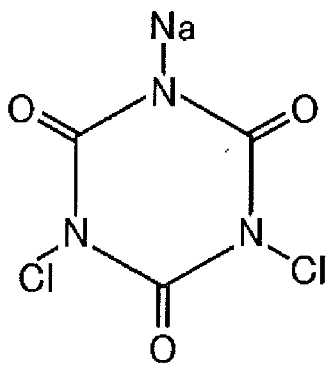

··· (2)

As the sterilizing agent 33, it is appreciate to use the trichloroisocyanuric acid shown by Structural Formula (1) or the dichloroisocyanurate such as sodium dichloroisocyanurate shown by Structural Formula (2). The sterilizing agent 33 can generate the hypochlorous acid (HOCl) which exerts sterilization by dissolving into the water, and further sterilize the ballast water in the ballast tank 60 with use of the hypochlorous acid. The trichloroisocyanuric acid has a low solubility in water, and thus it may be uneasy to use this acid for preparation of a solution having a high concentration. However, an effective component of the acid can be supplied little by little over a long time period. Also, the acid has an extremely high effective concentration of chlorine, i.e., around 90 %, and thus can reliably provide a sterilization effect only by a small amount thereof. Moreover, each of trichloroisocyanuric acid and dichloroisocyanurate has an excellent temperature stability, and thus is less likely to deteriorate and can be safely used even when kept under the high temperature of around 40 °C. Furthermore, unlike the calcium hypochlorite, the trichloroisocyanuric acid and dichloroisocyanurate are

advantageous in fewer occurrences of precipitates caused when dissolving into the water. The dichloroisocyanurate is further advantageous in a high solubility in water and quick preparation of the ballast water containing the sterilizing agent 33.

When the trichloroisocyanuric acid is used as the sterilizing agent 33, it may be used alone or used in combination with a disintegrating assistive agent by addition, if necessary. Owing to the addition of the disintegrating assistive agent in combination with the sterilizing agent 33, the disintegrating assistive agent firstly dissolves into the water, thereby assisting the sterilizing agent to easily disintegrate and lose its shape. The assisted disintegration of the sterilizing agent 33 leads to easier dissolution thereof into the water. As the disintegrating assistive agent, it is appreciated to adopt a well-known agent, such as carboxymethyl cellulose. The disintegrating assistive agent preferably accounts for 1 to 10 % by mass ratio of the entire sterilizing agent 33.

A total amount of the sterilizing agent 33 to be put in is calculated on the basis of an amount of the ballast water required to fill the ballast tank 60 and a concentration of the sterilizing component. For example, when the water in the amount of 1000 tons is required to fill the ballast tank 60, a value of the concentration of chlorine is set to 10 mg/L and a concentration of the sterilizing agent 33 required to obtain 10mg/L of the concentration of chlorine is 12 mg/L, the total amount of the sterilizing agent 33 to be put in is calculated as 12 kg by the following equation:

$$12\ (\text{mg/L}) \times 1000\ (\text{tons}) \times 1000\ (\text{L/ton}) = 12\ \text{kg}.$$

The amount of the sterilizing agent 33 calculated by the aforementioned equation is supplied into the ballast pipe 11 at one or more times in accordance with the capacity of the container 31. For example, when the sterilizing agent supply unit 30 includes twenty containers 31 each having an internal capacity adapted to contain 100 g of the sterilizing agent, it is possible to fill the sterilizing agent supply unit 30 with 100g $\times$ 20 = 2 kg of the sterilizing agent 33 by each operation of filling all the containers 31 with the sterilizing agent. When the sterilizing agent supply unit 30 supplies the sterilizing agent by 100g to the ballast pipe 11 by opening the bottom plates of the containers 31 one by one at the interval of 2 minutes, the sterilizing agent 33 contained in all the containers is supplied to the ballast pipe 11 in 40 minutes. This means that the sterilizing agent supply unit 30 is required to be filled with 2 kg of the sterilizing agent in each 40 minutes. This filling operation is repeated for six times to thereby achieve supply of 12 kg of the sterilizing agent into the ballast pipe 11.

In the embodiment, described is the configuration in which the sterilizing agent supply unit 30 sequentially opens the bottom plates 34 of the containers 31 one by one in the interval of minutes. However, it is appreciated to provide a supplying amount adjuster for adjusting the inner diameter and the inclination angle of the supply pipe 36. Owing to the adjustment of the inner diameter and the inclination angle of the supply pipe 36 by the supplying amount adjuster, all the sterilizing agent 33 in the container 31 can be gradually supplied to the ballast pipe 11 when the bottom plate 34 is opened. Hence, it is possible to adjust the supply speed of the sterilizing agent. Further, the sterilizing agent 33 having fallen from the container 31 can be supplied into the ballast pipe 11 at a constant speed.

By supplying a predetermined amount of the sterilizing agent to ballast water at a constant interval as the supply method of the sterilizing agent according to the present embodiment, a proportion of the sterilizing agent 33 to ballast water can be decreased. Therefore, it is advantageous that the sterilizing agent 33 is unlikely to remain undissolved.

The shape of the sterilizing agent 33 should not be particularly limited, and may be granular, powdery, dose like and/or pellet like, but is preferably granular to have a diameter of 0.1 to 10 mm in terms of convenience in use. A granular sterilizing agent having the diameter of 0.1 mm or more is less likely to cause dusts, and thus is easily adoptable. Also, a sterilizing agent having the diameter of 10 mm or less can contribute to reduction in a dead space at the time of measurement, and avoid a steep reduction in a dissolution speed.

The mixer 50 lies on the ballast pipe 11 at a downstream position of a connection portion of the ballast pipe 11 to the supply pipe 36. The mixer 50 is used to agitate the ballast water having been supplied with the sterilizing agent to thereby allow the sterilizing agent to easily dissolve into the ballast water, and allow the ballast water to have a uniform concentration of the sterilizing component.

The concentration detector 42 is attached to the ballast tank 60 as shown in FIG. 1, and detects a concentration of the sterilizing component in the ballast water in the ballast tank 60. When a chlorine agent is used as the sterilizing agent, the concentration of the sterilizing component is interrelated with the concentration of chlorine. The concentration of chlorine

(mg/L) is detected as a total residual oxidant (TRO) concentration in the ballast water. The TRO concentration can be detected by a detector using a DPD reagent. The concentration detector 42 detects the concentration of the sterilizing component in the ballast water in the ballast tank 60. A detection result is sent to the controller 70 to be described later as a feedback. In this way, it possible to control the concentration of the sterilizing component in the ballast water in the ballast tank 60. Owing to this control, the sterilizing agent supply unit 30 can supply a suitable amount

of the sterilizing agent into the ballast pipe 11. Further, it is possible to appropriately increase the concentration of the sterilizing component in the ballast water in the ballast tank 60. Besides, the concentration detector 42 is sufficient to detect the concentration of the sterilizing component in the ballast tank 60, and thus another sensor of a different type may be used in the same manner instead.

The controller 70 is connected to the sterilizing agent supply unit 30, the flow rate detector 41 and the concentration detector 42, and further is configured by a personal computer including a calculator, a storage and the like. The controller 70 acquires information of the flow rate of the ballast water detected by the flow date detector 41 and information of the concentration in the ballast water detected by the concentration detector 42. Next, the controller 70 calculates a time interval to open each of the bottom plates 34 of the containers 31 on the basis of the respective information. After that, the controller 70 sequentially opens the bottom plates 34 of the containers 31 of the sterilizing agent supply unit 30 on the basis of the calculated time interval to thereby achieve the supply of the sterilizing agent into the ballast pipe 11 at a right timing. This configuration makes it possible to adjust the concentration of the sterilizing component in the ballast water to fall within a desired range.

[Ballast water treatment method]

Next, a ballast water treatment method according to the present embodiment performed by using the ballast water treatment apparatus 1 will be described below.

First of all, the ballast pump 10 is operated to draw seawater as ballast water into the ballast pipe 11. A filtration device 20 filtrates the drawn ballast water in order to remove impurities. Subsequently, a flow rate detector 41 detects a flow rate of the ballast water when the ballast water passes the flow rate detector 41. Information detected by the flow rate detector 41 is sent to the controller 70.

The controller 70 calculates a time interval to open the bottom plates 34 of each of the containers 31 in the sterilizing agent supply unit 30 on the basis of the flow rate of the ballast water detected by the flow rate detector 41 and an effective concentration of the sterilizing agent that is set in advance. For example, when the flow rate of the ballast water is 300 $m^3$/hour (5000L/minute), weight of the sterilizing agent contained in each of the containers is 100 g, an effective concentration of chlorine of the sterilizing agent is 50 % and an effective concentration of chlorine of the ballast water in the ballast tank 60 is 10 mg - TRO/L, the calculator of the controller 70 calculates such that 100g sterilizing agent is supplied to the ballast pipe 1 1 every 1 minute in accordance with the following equation:

$$100000 \times 0.5 / (5000 \times 10) = 1 \text{ (minute)}.$$

Then, the controller 70 creates an automatic program to sequentially open the bottom plates 34 of the containers 31 in the sterilizing agent supply unit 30 one by one at the time interval calculated by the calculator when the drawing of the ballast water is started. In accordance with this automatic program, the controller 70 sequentially opens the bottom plate 34 of each of the containers 31. In this manner, constant amount sterilizing agent is supplied to the ballast pipe 11 per unit time. Further, the sterilizing agent flows into the mixer 50 together with the ballast water flowing in the ballast pipe 11. The mixer 50 agitates the ballast water and the sterilizing agent. This configuration makes it possible to fill the ballast tank 60 with the ballast water having uniform concentration of the sterilizing component.

A concentration detector 42 periodically detects a concentration of the sterilizing component of the ballast water filling the ballast tank 60, and a detection result is sent to the controller 70. The controller 70 determines whether or not the concentration detected by the concentration detector 42 falls within a reference range. This reference range is set in advance in consideration of a treatment capability of a ballast water treatment apparatus and a design of a vessel. When the concentration detected by the concentration detector 42 deviates from the reference range, the controller 70 notifies the deviation to an unillustrated alarm. The alarm having received information of the deviation sends a warning to a user. The user having received this warning adjusts unit time for putting in the sterilizing agent. The concentration of the sterilizing component of the ballast water in the ballast tank is detected in this way. Moreover, the detection result from the concentration detector 42 is reflected in a supplying amount of the sterilizing agent as a feedback to thereby make it possible to adjust the concentration of the sterilizing component of the ballast water to fall within an appropriate range.

<Modifications>

In the above embodiment, the sterilizing agent supply unit 30 configured to open the bottom plates of the plurality of containers 31 at a constant time interval is described, but should not be limited thereto, and various ways may be adopted as far as constant amount of the sterilizing agent can be supplied to the ballast pipe 11 per unit time.

For example, it is appreciated to fill the container 31 having a predetermined capacity with the sterilizing agent 33, and supply all the amount of the sterilizing agent 33 in the container 31 to the ballast pipe 11. Alternatively, it is appreciated to weigh a predetermined amount of the sterilizing agent 33 in the container 31, and to supply the weighed sterilizing agent 33 to the ballast pipe 11. The container 31 is not limited to the shape shown in FIG. 2 as far as a predetermined capacity thereof is measurable, and may be a pipe having both ends openable by valves. In the case of supplying the sterilizing agent by using a pipe, it is possible to supply a constant amount of the sterilizing agent to the ballast pipe 11 per unit time by opening the valve disposed at the lower side of the pipe in 5 seconds at the interval of 1 minute.

In the above embodiment, the inner diameter of the ballast pipe 11 is defined to be larger than that of the supply pipe 36 in order to prevent the ballast water from flowing in the supply pipe 36, but a preventing way should not be limited thereto. Adoptable various ways may include, for example, providing a flow-in prevention valve for preventing the ballast water from flowing in the sterilizing agent supply unit 30.

In the above embodiment, the sterilizing agent is directly supplied to the ballast pipe 11. However, it is appreciated to first put the sterilizing agent in a solution having a suitable amount to dissolve the sterilizing agent therein, and then, cause a supply pump to eject the solution containing the dissolved sterilizing agent into the ballast pipe 11.

In the above embodiment, the single sterilizing agent supply unit 30 is connected to the ballast pipe 11. However, a plurality of sterilizing agent supply units 30 may be connected to the ballast pipe 11. In use of the plurality of sterilizing agent units 30, it is possible to change one sterilizing agent supply unit 30 that has finished supply of the sterilizing agent to another subsequent sterilizing agent supply unit 30 at the timing of the finish of the supply. This configuration makes it easier to ensure a time period required for an operation of filling the sterilizing agent supply unit 30 with the sterilizing agent.

In the above embodiment, the flow rate detector 41 is connected to the portion of the ballast pipe 11 downstream of the filtration device 20. However, the arrangement of the flow rate detector 41 should not be limited thereto, and may be any position as far as the flow speed of the ballast water flowing in the ballast pipe 11 can be detected at the position.

In the above embodiment, the controller 70 calculates a timing and an amount of the sterilizing agent to be supplied from the sterilizing agent supply unit 30 to the ballast pipe 11 on the basis of a detection result of a flow rate of the ballast water from the flow rate detector 41, but a calculation way should not be limited thereto. For example, the controller 70 may calculate the timing and the amount of the sterilizing agent to be supplied from the sterilizing agent supply unit 30 to the ballast pipe 11 on the basis of a concentration of a sterilizing component of the ballast water in the ballast tank 60, the concentration being detected by the concentration detector 42. Specifically, when the concentration detector 42 detects a higher concentration of the sterilizing component of the ballast water than a reference range, the controller 70 controls the sterilizing agent supply unit 30 to supply a decreased amount of the sterilizing agent to the ballast pipe 11. To the contrary, when the concentration detector 42 detects a lower concentration of the sterilizing component in the ballast water than the reference range, the controller 70 controls the sterilizing agent supply unit 30 to supply an increased amount of the sterilizing agent to the ballast pipe 11.

In the above embodiment, the concentration detector 42 is attached to the ballast tank 60. However, when dichloroisocyanurate which can dissolve rapidly into the ballast water is used as the sterilizing agent 33, the concentration detector 42 may be connected to the portion of the ballast pipe 11 downstream of the mixer 50 and upstream of the ballast tank 60 as shown in FIG 3. It is possible to control TRO concentration of the ballast water filling the ballast tank 60 by detecting TRO concentration of the ballast water flowing in the ballast pipe 11 by the concentration detector 42 disposed at the position shown in FIG 3.

The sterilizing agent supply unit 30 in the above embodiment supplies the sterilizing agent 33 in the container 31 to the ballast pipe 11 by opening the bottom plates 34 of the containers 31. However, the specific configuration of the sterilizing agent supply unit 30 should not be limited thereto as far as a predetermined amount of the sterilizing agent 33 can be put into the ballast pipe 11 in accordance with a flow rate of the ballast water flowing in the ballast pipe 11. For example, a sterilizing agent supply unit 30a shown in FIG. 4 may be disposed above the ballast pipe 11, thereby supplying a constant amount of the sterilizing agent 33 to the ballast pipe 11 per unit time.

The sterilizing agent supply unit 30a supplies a constant amount of the sterilizing agent 33 per unit time to the ballast pipe 11 via the supply pipe 36a. As shown in FIG. 4, the sterilizing agent supply unit 30a is configured in plate shape extending in one direction (a longitudinal direction). The sterilizing agent supply unit 30a includes a rectangular lower plate 34a provided with an opening 34b extending through from an upper surface to a lower surface thereof, a pair of guide plates 37 standing on the upper surface of the lower plate 34a at both ends of the lower plate 34a in a width direction and extending in the longitudinal direction, a sterilizing agent accommodating member 31a placed slidably on the upper surface of the lower plate 34a between the pair of the guide plates 37, a supply pipe 36a which supplies the sterilizing agent having fallen through the opening 34b to the ballast pipe 11 and a pusher 35 which pushes the sterilizing agent accommodating member 31a in the longitudinal direction of the lower plate 34a.

As shown in FIG. 4, the sterilizing agent accommodating member 31a has a box shape with a discharge opening at a bottom thereof. In the present embodiment, the sterilizing agent accommodating member 31a is a hollow member including a plurality of cylindrical accommodating portion 32a inside. When seen in a planar view, the sterilizing agent

accommodating member 31a is in the form of a flat ladder-like frame as a whole. Specifically, the sterilizing agent accommodating member 31a includes longitudinal face plates 31b coming into surface contact with the pair of the guide plates 37, a pair of end plates 31c connecting respective ends of the longitudinal face plates 31b and a plurality of partition plates 31d disposed away from each other in parallel with the end plates 31c and connecting the longitudinal face plates 31b. The plurality of the accommodating portions 32a in the present embodiment is separated from each other by the partition plates 31d in such a manner as to respectively have the same capacity. Also, each of the accommodating portions 32a is filled with the same weight of the sterilizing agent 33.

The lower plate 34a supports the sterilizing agent accommodating member 31a and the sterilizing agent 33 in the accommodating portion 32a from lower side. The lower plate 34a is provided with the opening 34b which extending through in up-down direction. The sterilizing agent 33 in the accommodating portion 32a positioned above the opening 34b falls into the supply pipe 36a through the opening 34b.

The supply pipe 36a connects the opening 34b of the lower plate 34a and the ballast pipe 11, and serves as a flow passage for guiding the sterilizing agent 33 having fallen through the opening 34b to the ballast pipe 11. The inner diameter of the supply pipe 36a at a connection portion with the ballast pipe 11 is sufficiently smaller than the inner diameter of the ballast pipe 11. Therefore, it is possible to keep the ballast water flowing in the ballast pipe 11 from entering the supply pipe 36a. In this way, it is possible to gradually supply the sterilizing agent 33 to the ballast pipe 11 through the supply pipe 36a.

The pair of the guide plates 37 has the same shape, and is provided for assisting the sterilizing agent accommodating member 31a to slide in the longitudinal direction of the lower plate 34a. A distance between the pair of the guide plates 37 is substantially equivalent to the width of the sterilizing agent accommodating member 31a. Owing to the guide plates 37, the sterilizing agent accommodating member 31a arranged on the lower plate 34b never falls therefrom, and is slidable forward and backward in the longitudinal direction of the lower plate 34a.

The pusher 35 pushes the sterilizing agent accommodating member 31a in the longitudinal direction of the lower plate 34a at a constant speed. The pushing speed is controlled by the controller 70. The controller 70 calculates the pushing speed of the pusher 35 on the basis of a flow rate of the ballast water flowing in the ballast pipe 11, TRO concentration, an effective concentration of chlorine of the sterilizing agent and weight of the sterilizing agent 33 filling each of the accommodating portions 32a. The pusher 35 pushes the sterilizing agent accommodating member 31a in the longitudinal direction at the calculated pushing speed. In this manner, the sterilizing agent accommodating member 31a slides in the longitudinal direction of the lower plate 34a. Further, the accommodating portions 32a sequentially reach above the opening 34b from the one closest thereto. The sterilizing agent 33 in the accommodating portion 32a having reached above the opening 34b falls into the supply pipe 36a through the opening 34b. In this way, a constant amount of the sterilizing agent is supplied to the ballast pipe 11 per unit time through the supply pipe 36a. Here, the sterilizing agent supply unit 30a should not be limited to the configuration shown in FIGS. 4 and 5 as far as it can supply the sterilizing agent 33 in a specified time period.

The sterilizing agent supply unit 30a shown in FIGS. 4 and 5 can supply a constant amount of the sterilizing agent 33 to the ballast pipe 11 per unit time by adjusting the pushing speed of the pusher 35, and thus can achieve a more convenient control mechanism in use than the embodiment in which the bottom plates of the containers are opened one by one.

<technical effects by a ballast water treatment apparatus>

Hereinafter, technical effects by the above-described ballast water treatment apparatus 1 and the ballast water treatment method will be described. The ballast water treatment apparatus 1 is provided with the sterilizing agent supply unit 30 independently from the ballast pipe 11, and thus the ballast water flowing in the ballast pipe 11 never comes into contact with the sterilizing agent 33. Besides, the sterilizing agent supply unit 30 provided independently from the ballast pipe 11 supplies a constant amount of the sterilizing agent to the ballast pipe 11 per unit time in accordance with a flow rate of the ballast water flowing in the ballast pipe 11. Specifically, when the flow rate of the ballast water flowing in the ballast pipe 11 is low, a decreased amount of the sterilizing agent 33 can be supplied to the ballast pipe 11. To the centrally, when the flow rate of the ballast water flowing in the ballast pipe 11 is high, an increased amount of the sterilizing agent 33 can be supplied to the ballast pipe 11.

Thus, in comparison with a conventional configuration in which the sterilizing agent is placed in the ballast pipe 11, it is possible to avoid supply of an excessive amount of the sterilizing agent with respect to the flow rate of the ballast water flowing in the ballast pipe 11. In addition, it is possible to prevent an amount of the sterilizing agent from being too small. Hence, the concentration of the sterilizing component of the ballast water filling the ballast tank 60 can be easily adjusted to fall within a predetermined range. This adjustment can contribute to reliable suppression of an increase in microorganisms and germs in the ballast water in the ballast tank 60. Also, it is possible to suppress a steep increase in the concentration of the sterilizing component of the ballast water and odor from the sterilizing component, and further avoid the problem of corrosion likely to occur in the ballast water treatment apparatus 1. Additionally, the sterilizing agent

is unlikely to remain undissolved owing to the supply of the constant amount of the sterilizing agent per unit time to the ballast pipe 11.

Besides, supply of an excessive amount of the sterilizing agent to the ballast pipe 11 can be avoided. Therefore, the sterilizing agent is unlikely to remain undissolved, which leads to suppression of a steep increase in the concentration of the sterilizing component in the ballast water due to dissolution of the sterilizing component from the sterilizing agent into the ballast water. Conclusively, it is possible to suppress corrosion likely to occur in the apparatus and an adverse effect to a human body.

Moreover, the ballast water treatment apparatus further comprises the controller 70 which controls the sterilizing agent supply unit 30 to stop the supply of the sterilizing agent 33 to the ballast pipe 11 when the supply of ballast water to the ballast tank 60 is stopped. The ballast water treatment method according to the above embodiment using the controller 70 further comprises a step of stopping the supply of the sterilizing agent 33 to the ballast pipe 11 when the supply of ballast water to the ballast tank 60 is stopped.

As described above, the controller 70 stops the supply of the sterilizing agent to the ballast pipe 11 when the supply of the ballast water to the ballast tank 60 is stopped. In this way, the supply of the sterilizing agent from the sterilizing agent supply unit 30 to the ballast pipe 11 is stopped at the timing when the supply of the ballast water to the ballast tank 60 is stopped. Thus, an unused sterilizing agent is kept in the unused state in the sterilizing agent supply unit 30 without being supplied to the ballast pipe 11 even at any timing when the drawing of the ballast water is stopped. This configuration can keep the unused sterilizing agent from getting wet and partially dissolving by coming into contact with the ballast water, and further keep the sterilizing component from unnecessarily dissolving from the sterilizing agent.

In the above embodiment, the ballast water treatment apparatus 1 further comprises a flow rate detector 41 which detects a flow rate of ballast water flowing in the ballast pipe 11. The ballast water treatment method according to the above embodiment further comprises steps of detecting a flow rate of ballast water flowing in the ballast pipe 11, calculating weight of the sterilizing agent 33 to be supplied to the ballast pipe 11 per unit time on the basis of the detected flow rate of the ballast water and supplying a constant amount of the sterilizing agent 33 per unit time to the ballast pipe 11 on the basis of the calculated weight of the sterilizing agent 33. The flow rate detector 41 detects a flow rate of the ballast water and sends a detection result to the controller 70. Hence, the controller 70 can calculate a timing for supplying the sterilizing agent on the basis of information of the flow rate of the ballast water, the weight of the sterilizing agent and the effective concentration of chlorine. Also, the controller 70 allows the sterilizing agent supply unit 30 to supply the constant amount of the sterilizing agent to the ballast pipe 11 at the calculated time interval. This configuration makes it possible to supply a required amount of the sterilizing agent according to the amount of the drawn ballast water to the ballast pipe 11 by each constant amount. Accordingly, the concentration of the sterilizing agent in the ballast water is easily adjustable to fall within a desired range.

In the present embodiment, the sterilizing agent supply unit 30 includes a plurality of containers 31 (example of accommodating portions) each of which accommodates a constant amount of the sterilizing agent. The controller 70 controls the sterilizing agent supply unit 30 such that a constant amount of the sterilizing agent 33 accommodated in each of the containers 31 is supplied to the ballast pipe 11 at a constant time interval. This configuration makes it possible to ensure the supply of the constant amount of the sterilizing agent 33 to the ballast pipe 11. In this way, the concentration of the sterilizing component in the ballast water in the ballast tank 60 is easily adjustable to fall within a predetermined range. Furthermore, since the sterilizing agent 33 having not been supplied to the ballast pipe 11 is kept in the containers 31, the sterilizing agent 33 can be kept from accidently coming into contact with the ballast water.

In the above embodiment, the sterilizing agent 33 is granule, and thus is less likely to cause dusts and easily adoptable. Further, this shape is suitable to avoid a steep reduction in a dissolution speed of the sterilizing agent. The sterilizing agent in the above ballast water treatment apparatus is calcium hypochlorite or chlorinated isocyanurate, and is preferably trichloroisocyanuric acid or dichloroisocyanurate. Such a sterilizing agent tends to generate the hypochlorous acid (HOCl) which exerts sterilization. It is possible to sterilize the ballast water in the ballast tank by the hypochlorous acid.

Moreover, owing to the trichloroisocyanuric acid serving as the sterilizing agent 33, the effective component can be supplied little by little over a long time period. Besides, the acid has an extremely high effective concentration of chlorine, i.e., around 90 %, and thus can easily bring about a sterilization effect by only a small amount thereof.

In contrast, dichloroisocyanurate has a high solubility in the water, and thus can contribute to quick preparation of the ballast water containing the sterilizing agent. As the dichloroisocyanurate, it is appreciated to adopt sodium dichloroisocyanurate. Moreover, each of the trichloroisocyanuric acid and the dichloroisocyanurate has an excellent temperature stability, and thus is less likely to deteriorate and can be safely used even when kept under the high temperature of around 40°C.

## Examples

(Example 1)

In the present example, a prototype treatment apparatus simulated from the ballast water treatment apparatus 1 shown in FIG. 1 was used. In the ballast water treatment apparatus with reference to FIG. 1, a polyolefin filter having an opening of 40 $\mu$m was used as a filtration device 20. A sterilizing agent supply unit 30 includes thirty containers each having such an internal capacity as to accommodate 2 g of a granular sterilizing agent having a diameter of 2 mm and consisting of trichloroisocyanuric acid. 2 g of the sterilizing agent have been put in each of the containers in advance. The bottom plate of the container is independently controlled by the controller 70 so as to open and close. The bottom plate 34 in closed state causes the sterilizing agent 33 to stay in the container 31. When the bottom plate is in open state, the sterilizing agent 33 falls from the container 31 to be supplied to the ballast pipe 11. In the present example, TRO concentration in ballast water in the ballast tank 60 was set to 10 $\pm$ 1 mg/L, and the water treatment was performed for 30 minutes in the following manner.

First, natural seawater was supplied in the ballast pipe 11, and the impurities in the natural seawater was removed by causing the natural seawater pass through the filtration device 20. Next, the flow rate detector 41 detected a flow rate of the ballast water flowing in the ballast pipe 11. As a result of the detection, the flow rate of the ballast water flowing in the ballast pipe 11 was 167 L/minute (10 tons/hour). The flow rate detector 41 sent the detection result of the flow rate to the controller 70.

The controller 70 calculated that it was required to introduce 2 g of the sterilizing agent to the ballast pipe 11 at the interval of 65 second, on the basis of a flow rate of the natural seawater (167 L/minute), a predetermined TRO concentration (10 mg/L), an effective concentration of chlorine of trichloroisocyanuric acid (90 %) and weight of the sterilizing agent required to fill each of the containers (2g), by the following equation :

$$2\ (\mathrm{g}) \times 0.90 / \{167\ (\mathrm{L/minute}) \times 10\ (\mathrm{mg/L})\} = 65\ (\mathrm{seconds}).$$

Further, the controller 70 created an automatic program to open a bottom plate of one container of the sterilizing agent supply unit 30 to introduce 2 g of the sterilizing agent in the container to the ballast pipe 11 when the supply of the natural seawater started, and after that, to sequentially open the bottom plates of the containers in the sterilizing agent supply unit 30 one by one at the interval of 65 seconds (i.e., to supply 2 g of the sterilizing agent at the interval of 65 seconds).

After the sterilizing agent supply unit 30 supplied the sterilizing agent into the ballast water flowing in the ballast pipe 11, the mixer 50 agitated the ballast water and the sterilizing agent. After the agitation, the ballast water filled the ballast tank 60. A concentration detector 42 detected TRO concentration in the ballast water in the ballast tank 60 every 5 minutes after the drawing of the ballast water was started to thereby observe a change in TRO concentration in accordance with a lapse of time. The observation result will be shown in Table 1 below.

(Example 2)

In the example 2, water treatment was performed in the same manner as the example 1 except that adopted was a granular sterilizing agent having a diameter of 2.5 mm and including trichloroisocyanuric acid by 98 wt% and carboxymethylcellulose calcium (disintegrating assistive agent) by 2 wt%. The effective concentration of chlorine in the sterilizing agent was 88 %. Thus, a calculator of the controller 70 calculated that it was required to introduce 2 g of the sterilizing agent to the ballast pipe 11 at the interval of 63 seconds by the following equation. The controller 70 allowed 2 g of the sterilizing agent to be supplied to the ballast pipe 11 at the interval of 63 seconds.

$$2\ (\mathrm{g}) \times 0.88 / \{167\ (\mathrm{L/minute}) \times 10\ (\mathrm{mg/L})\} = 63\ (\mathrm{second}).$$

Like the example 1, the concentration detector 42 was used in the example 2 as well to observe every 5 minutes a change in TRO concentration in the ballast water in the ballast tank 60 in accordance with a lapse of time. The observation result will be shown in Table 1 below.

(Example 3)

In this example, ballast water was prepared in the same manner as the example 1 except that the sterilizing agent supply unit 30 of the ballast water treatment apparatus in the example 1 was modified to have the configuration

shown in FIGS. 4 and 5, and further the sterilizing agent 33 was changed to sodium dichloroisocyanurate. Besides, in the example, an inclination of the supply pipe 36a was adjusted, and an inner diameter of the supply pipe 36a at a connection portion thereof to the ballast pipe 11 was set to 1/30 of the inner diameter of the ballast pipe 11, and a speed to supply the sterilizing agent 33 to the ballast pipe 11 through the supply pipe 36a was adjusted.

A sterilizing agent supply unit 30a used in the example utilized the sterilizing agent accommodating member 31a having forty accommodating portions 32a extending through in up-down direction and separated from each other. Each of the accommodating portions 32a is filled with 3 g of granular sterilizing agent having a diameter of 2 mm and consisting of sodium dichloroisocyanurate.

A controller 70 calculated that it was required to introduce 3 g of the sterilizing agent to the ballast pipe 11 at the interval of 1 minute on the basis of a flow rate of the natural seawater (167L/minute), TRO concentration set in advance (10 mg/L), an effective concentration of chlorine in sodium dichloroisocyanurate (56%) and weight of the sterilizing agent to fill each of the accommodating portions 32a, by the following equation:

$$3\ (\text{g}) \times 0.56 / \{167\ (\text{L/minute}) \times 10\ (\text{mg/L})\ \} = 1\ (\text{minute}).$$

Moreover, the controller 70 created an automatic program such that the pusher 35 pushes the sterilizing agent accommodating member 31a in a longitudinal direction of the lower plate 34a at a constant speed when the supply of the natural seawater started, and the accommodating portions 32a of the sterilizing agent accommodating member 31a become empty one by one in the interval of 1 minute (i.e., 3 g of the sterilizing agent is supplied in each 1 minute at a uniform speed). In the example, the inner diameter and the inclination of the supply pipe 36a were adjusted so that 3 g of the sterilizing agent 33 having fallen through an opening 34b was uniformly supplied to the ballast pipe 11 in 1 minute.

Like the example 1, the concentration detector 42 was used in the example 3 as well to observe every 5 minutes a change in TRO concentration in the ballast water in the ballast tank 60 in accordance with a lapse of time. The observation result will be shown in Table 1 below.

(Comparative Example 1)

In the comparative example 1, a ballast water treatment apparatus 1' shown in FIG. 6 was used in place of the ballast water treatment apparatus shown in FIG 1. FIG 6 is a schematic view showing a configuration of the ballast water treatment apparatus in the comparative example 1. Regarding reference numerals given to respective elements shown in FIG 6, it should be noted that some elements having the same configurations as those shown in FIG. 1 are given with the same reference numerals, while other elements partly modified are given with the same reference numerals together with the dash sign (') to clarify the difference. In the ballast water treatment apparatus 1' in the comparative example 1 as shown in FIG. 6, a sterilizing agent dissolving device 30' was connected to a bypass line 12 in place of the sterilizing agent supply unit 30.

The bypass line 12 branched from the ballast pipe 11 at a branch point 2D which is a downstream position of the flow rate detector 41, and rejoined the ballast pipe 11 at a rejoining point 2E which is an upstream position of the mixer 50. The natural seawater (ballast water) flowing in the bypass line 12 passed through the sterilizing agent dissolving device 30', and returned to the ballast pipe 11. The sterilizing agent dissolving device 30' was filled with 60 g of a granular sterilizing agent 33 having a diameter of 2 mm and consisting of trichloroisocyanuric acid. In this configuration, ballast water flowing in the ballast pipe 11 passed through an internal part of the sterilizing agent dissolving device 30' to thereby allow a sterilizing component to dissolve into the ballast water.

A valve 25 was attached to each of the ballast pipe 11 at a downstream position of the branch point 2D and the bypass line 12. Owing to the valve 25, the flow rate of the ballast water to flow in each of the ballast pipe 11 and the bypass line 12 was adjusted.

Like the example 1, in the comparative example 1, the natural seawater in the weight of 10 tons was drawn into the ballast pipe 11 at a flow rate of 167 L/minute (10 tons/hour), and then 111 L/minute equivalent to 2/3 of the drawn natural seawater was caused to flow in the ballast pipe 11, while 56 L/minute equivalent to 1/3 of the drawn natural seawater was caused to flow in the bypass pipe 12, at the branch point 2D by adjusting the opening of the valve 25. The ballast water flowing in the bypass line 12 passed through the sterilizing agent dissolving device 30' to thereby cause the sterilizing component to dissolve, subsequently flowed into the ballast pipe 11 at the rejoining point 2E, and further was agitated by the mixer 50 to fill the ballast tank 60.

Like the example 1, the concentration detector 42 was used in the comparative example 1 as well to observe every 5 minutes a change in TRO concentration in the ballast water in the ballast tank 60 in accordance with a lapse of time. The observation result will be shown in Table 1 below.

[Table 1]

| Lapse of Time (minute) | | 5 | 10 | 15 | 20 | 25 | 30 |
|---|---|---|---|---|---|---|---|
| TRO Concentration (mg/L) | Example 1 | 9.6 | 9.5 | 9.8 | 9.5 | 10.2 | 9.9 |
| | Example 2 | 9.5 | 9.9 | 10.3 | 9.9 | 10.2 | 10.0 |
| | Example 3 | 9.8 | 10.2 | 9.9 | 10.2 | 10.0 | 10.1 |
| | Comparative Example 1 | 3.5 | 4.2 | 4.6 | 4.1 | 4.4 | 4.0 |

<Evaluation Result>

According to the results shown in Table 1, TRO concentration in the ballast water in the ballast tank 60 shifted within the range of 10 ÷ 1 mg/L during a time period from the start of the drawing of the natural seawater to the lapse of 30 minutes in Examples 1, 2 and 3. In contrast, TRO concentration in the comparative example 1 failed to reach the aimed TRO concentration (10 mg/L) in the ballast water. It was clarified from the results that the concentration of the sterilizing component in the ballast water is easily adjustable to fall within a desired range in the present invention (i.e., the examples 1, 2 and 3).

Furthermore, in the ballast water treatment apparatus in the examples 1, 2 and 3, no aberration was found in a sterilizing agent that had not been put into the ballast pipe 11 and no sterilizing agent remained undissolved in the ballast tank 60, even after the finish of the water treatment performed for 30 minutes. Therefore, no abnormality was found in the ballast water treatment apparatus even after a lapse of 1 hour from the finish of the water treatment. In contrast, in the ballast water treatment apparatus 1' in the comparative example 1, the sterilizing agent 33 having partially dissolved remained in the sterilizing agent dissolving device 30' after the finish of the water treatment performed for 30 minutes. When the apparatus was left in this state for 1 hour after the finish of the water treatment, strong odor of chlorine surrounded the ballast water treatment apparatus. Further, a part (made of polypropylene) in the apparatus having been in contact with the water was deformed due to corrosion. It was clarified from the results that the present invention makes it possible to keep the sterilizing agent from remaining partially dissolved after the finish of the water treatment, and further prevent corrosion likely to occur due to the sterilizing component in the water treatment apparatus.

## Claims

**1.** A ballast water treatment apparatus (1), comprising:

a ballast pipe (11) so as to supply ballast water to a ballast tank (60);
a sterilizing agent supply unit (30) so as to supply a constant amount of a sterilizing agent which is kept dry per unit time to the ballast pipe in accordance with a flow rate of ballast water flowing in the ballast pipe;
a flow rate detector (41) so as to detect the flow rate of ballast water flowing in the ballast pipe; and
a controller (70) so as to control the sterilizing agent supply unit to stop the supply of the sterilizing agent to the ballast pipe when the supply of ballast water to the ballast tank is stopped, wherein
the controller is arranged to calculate the weight of the sterilizing agent per unit time to be supplied to the ballast pipe by the sterilizing agent supply unit on the basis of the detection result by the flow rate detector, and to control the sterilizing agent supply unit such that the calculated weight of the sterilizing agent is supplied to the ballast pipe,
the sterilizing agent supply unit includes a plurality of containers (31) each of which accommodates a constant amount of the dry sterilizing agent,
the controller is arranged to control the sterilizing agent supply unit such that the constant amount of the sterilizing agent accommodated in each of the containers is supplied to the ballast pipe at a constant time interval.

**2.** The ballast water treatment apparatus according to claim 1, wherein
the sterilizing agent is granule.

**3.** The ballast water treatment apparatus according to claim 1 or 2, wherein
the sterilizing agent is calcium hypochlorite and/or chlorinated isocyanurate.

**4.** The ballast water treatment apparatus according to any one of claims 1 to 3, wherein

the sterilizing agent is trichloroisocyanuric acid.

5. The ballast water treatment apparatus according to any one of claims 1 to 3, wherein the sterilizing agent is dichloroisocyanurate.

6. A ballast water treatment method, comprising steps of:

   supplying ballast water to a ballast tank via a ballast pipe;
   detecting a flow rate of ballast water flowing in the ballast pipe;
   calculating weight of a sterilizing agent to be supplied to the ballast pipe per unit time on the basis of the detected flow rate of the ballast water;
   supplying a constant amount of the sterilizing agent per unit time to the ballast pipe on the basis of the calculated weight of the sterilizing agent; and;
   stopping the supply of the sterilizing agent to the ballast pipe when the supply of ballast water to the ballast tank is stopped, wherein
   in the step of supplying the sterilizing agent, a constant amount of the sterilizing agent which is kept dry and is accommodated in each of a plurality of containers is supplied to the ballast pipe at a constant time interval.

7. The ballast water treatment method according to claim 6, wherein the sterilizing agent is granule.

8. The ballast water treatment method according to claim 6 or 7, wherein the sterilizing agent is calcium hypochlorite and/or chlorinated isocyanurate.

9. The ballast water treatment method according to claim 6 or 7, wherein the sterilizing agent is trichloroisocyanuric acid.

10. The ballast water treatment method according to claim 6 or 7, wherein the sterilizing agent is dichloroisocyanurate.

**Patentansprüche**

1. Ballastwasseraufbereitungsvorrichtung (1), aufweisend:

   ein Ballastrohr (11), um Ballastwasser an einen Ballasttank (60) zuzuführen;
   eine Sterilisationsmittelzufuhreinheit (30), um eine konstante Menge an Sterilisationsmittel, welches trocken gehalten wird, pro Zeiteinheit an das Ballastrohr gemäß einer Strömungsrate von in dem Ballastrohr strömendem Ballastwasser zuzuführen;
   eine Durchflussratendetektionseinrichtung (41), um die Durchflussrate von in dem Ballastrohr strömenden Ballastwasser zu detektieren; und
   eine Steuereinheit (70), um die Sterilisationsmittelzufuhreinheit anzusteuern, die Zufuhr des Sterilisationsmittels an das Ballastrohr zu stoppen, wenn die Zufuhr von Ballastwasser an den Ballasttank gestoppt wird, wobei
   die Steuereinheit eingerichtet ist, das Gewicht des pro Zeiteinheit durch die Sterilisationsmittelzufuhreinheit an das Ballastrohr zuzuführenden Sterilisationsmittels auf Grundlage des Detektionsergebnisses der Durchflussratendetektionseinrichtung zu berechnen, und die Sterilisationsmittelzufuhreinheit derart anzusteuern, dass das errechnete Gewicht des Sterilisationsmittels an das Ballastrohr zugeführt wird,
   die Sterilisationsmittelzufuhreinheit eine Mehrzahl von Behältern (31) aufweist, die jeweils eine konstante Menge des trockenen Sterilisationsmittels aufnehmen,
   die Steuereinheit eingerichtet ist, die Sterilisationsmittelzufuhreinheit derart anzusteuern, dass die konstante Menge des Sterilisationsmittels, die in jedem der Behälter aufgenommen ist, mit einem konstanten Zeitintervall an das Ballastrohr zugeführt wird.

2. Ballastwasseraufbereitungsvorrichtung nach Anspruch 1, wobei das Sterilisationsmittel granuliert ist.

3. Ballastwasseraufbereitungsvorrichtung nach Anspruch 1 oder 2, wobei das Sterilisationsmittel Calciumhypochlorit und/oder chloriertes Isocyanurat ist.

4. Ballastwasseraufbereitungsvorrichtung nach einem der Ansprüche 1 bis 3, wobei das Sterilisationsmittel Trichlorisocyanursäure ist.

5. Ballastwasseraufbereitungsvorrichtung nach einem der Ansprüche 1 bis 3, wobei das Sterilisationsmittel Dichlorisocyanurat ist.

6. Ballastwasseraufbereitungsverfahren, aufweisend die Schritte:

Zuführen von Ballastwasser über ein Ballastrohr an einen Ballasttank;
Detektieren einer Durchflussrate von in dem Ballastrohr strömenden Ballastwasser;
Berechnen des Gewichts eines pro Zeiteinheit an das Ballastrohr zuzuführenden Sterilisationsmittels auf Grundlage der detektierten Strömungsrate des Ballastwassers;
Zuführen einer konstanten Menge des pro Zeiteinheit an das Ballastrohr zuzuführenden Sterilisationsmittels auf Grundlage des berechneten Gewichts des Sterilisationsmittels; und
Stoppen der Zufuhr des Sterilisationsmittels an das Ballastrohr, wenn die Zufuhr von Ballastwasser an den Ballasttank gestoppt wird, wobei
in dem Schritt des Zuführens des Sterilisationsmittels eine konstante Menge des Sterilisationsmittels, das trocken gehalten wird und in jedem einer Mehrzahl von Behältern aufgenommen ist, mit einem konstanten Zeitintervall an das Ballastrohr zugeführt wird.

7. Ballastwasseraufbereitungsverfahren nach Anspruch 6, wobei das Sterilisationsmittel granuliert ist.

8. Ballastwasseraufbereitungsverfahren nach Anspruch 6 oder 7, wobei das Sterilisationsmittel Calciumhypochlorit und/oder chloriertes Isocyanurat ist.

9. Ballastwasseraufbereitungsverfahren nach Anspruch 6 oder 7, wobei das Sterilisationsmittel Trichlorisocyanursäure ist.

10. Ballastwasseraufbereitungsverfahren nach Anspruch 6 oder 7, wobei das Sterilisationsmittel Dichlorisocyanurat ist.

## Revendications

1. Appareil (1) de traitement d'eau de ballast, l'appareil comprenant :

un tuyau de ballast (11) destiné à alimenter en eau de ballast une citerne de ballast (60) ;
une unité (30) d'alimentation en agent de stérilisation destinée à alimenter, en une quantité constante d'un agent de stérilisation maintenu sec, par unité de temps, le tuyau de ballast en fonction d'un débit d'eau de ballast coulant dans le tuyau de ballast ;
un détecteur de débit (41) destiné à détecter le débit d'eau de ballast coulant dans le tuyau de ballast ; et
un dispositif de commande (70) destiné à amener l'unité d'alimentation d'agent de stérilisation à arrêter l'alimentation en agent de stérilisation du tuyau de ballast lorsque l'alimentation en eau de ballast de la citerne de ballast est arrêtée,
le dispositif de commande étant conçu pour calculer le poids de l'agent de stérilisation, par unité de temps, à alimenter au tuyau de ballast, au moyen de l'unité d'alimentation en agent de ballast, en fonction du résultat de la détection à l'aide du détecteur de débit, et pour commander l'unité d'alimentation en agent de stérilisation de sorte que le poids calculé de l'agent de stérilisation soit alimenté au tuyau de ballast,
l'unité d'alimentation en agent de stérilisation comprenant une pluralité de récipients (31) recevant chacun une quantité constante de l'agent de stérilisation sec,
le dispositif de commande étant conçu pour commander l'unité d'alimentation en agent de stérilisation de sorte que la quantité constante de l'agent de stérilisation, reçue dans chaque récipient, soit alimentée au tuyau de ballast à un intervalle de temps constant.

2. L'appareil de traitement d'eau de ballast selon la revendication 1, dans lequel l'agent de stérilisation est un granulé.

3. L'appareil de traitement d'eau de ballast selon les revendications 1 ou 2, dans lequel l'agent de stérilisation est l'hypochlorite de calcium et/ou l'isocyanurate chloré.

**4.** L'appareil de traitement d'eau de ballast selon l'une quelconque des revendications 1 à 3, dans lequel l'agent de stérilisation est l'acide trichloroisocyanurique.

**5.** L'appareil de traitement d'eau de ballast selon l'une quelconque des revendications 1 à 3, dans lequel l'agent de stérilisation est le dichloroisocyanurate.

**6.** Procédé de traitement d'eau de ballast, comprenant les étapes suivantes :

l'alimentation en eau de ballast d'une citerne de ballast par l'intermédiaire d'un tuyau de ballast ;
la détection d'un débit d'eau de ballast coulant dans le tuyau de ballast ;
le calcul d'un poids d'un agent de stérilisation à alimenter au tuyau de ballast par unité de temps, en fonction du débit détecté de l'eau de ballast ;
l'alimentation, en une quantité constante de l'agent de stérilisation par unité de temps, du tuyau de ballast en fonction du poids calculé de l'agent de stérilisation ; et
l'arrêt de l'alimentation en agent de stérilisation du tuyau de ballast lorsque l'alimentation en eau de ballast de la citerne de ballast est arrêtée, où
dans l'étape d'alimentation en agent de stérilisation, une quantité constante de l'agent de stérilisation, maintenu sec et reçu dans chaque récipient parmi une pluralité de récipients, est alimentée au tuyau de ballast à un intervalle de temps constant.

**7.** Le procédé de traitement d'eau de ballast selon la revendication 6, dans lequel l'agent de stérilisation est un granulé.

**8.** Le procédé de traitement d'eau de ballast selon les revendications 6 ou 7, dans lequel l'agent de stérilisation est l'hypochlorite de calcium et/ou l'isocyanurate chloré.

**9.** Le procédé de traitement d'eau de ballast selon les revendications 6 ou 7, dans lequel l'agent de stérilisation est l'acide trichloroisocyanurique.

**10.** Le procédé de traitement d'eau de ballast selon les revendications 6 ou 7, dans lequel l'agent de stérilisation est le dichloroisocyanurate.

FIG.1

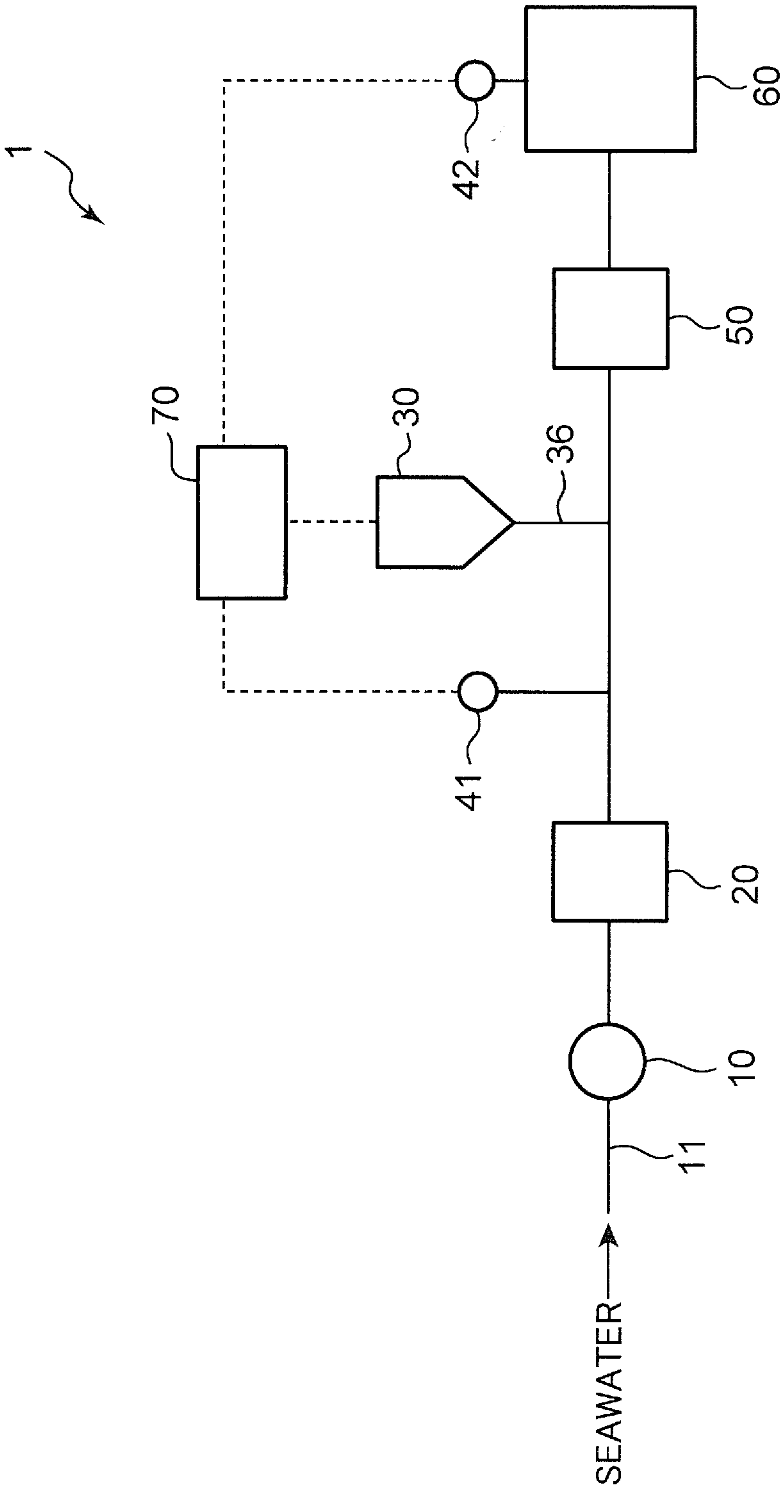

FIG.2

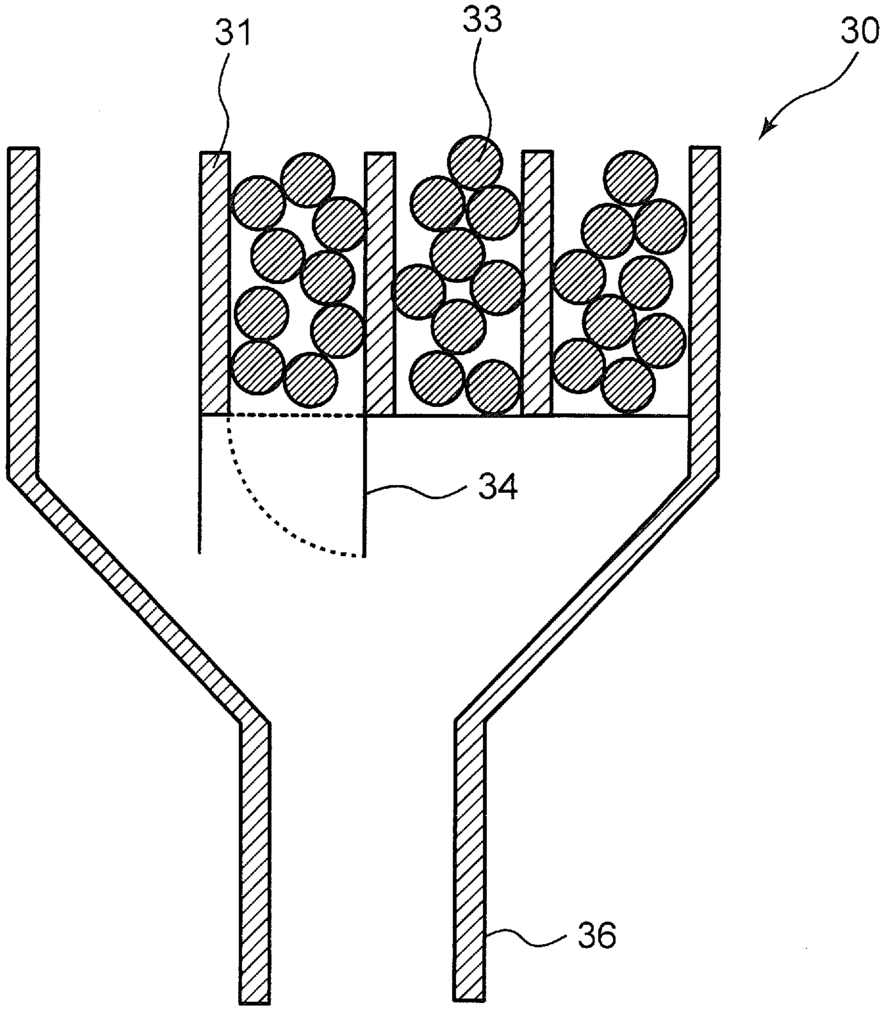

FIG.3

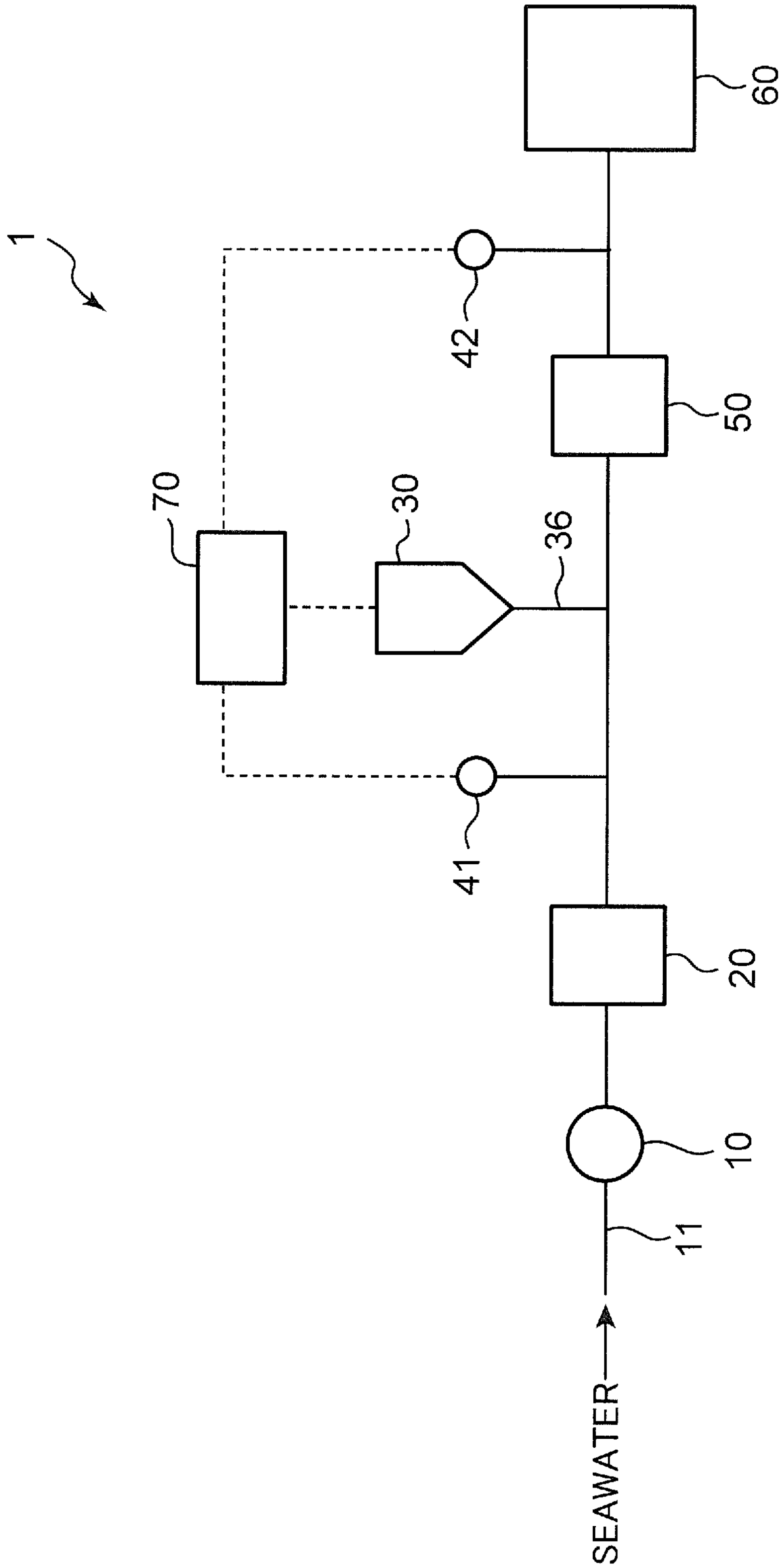

FIG.4

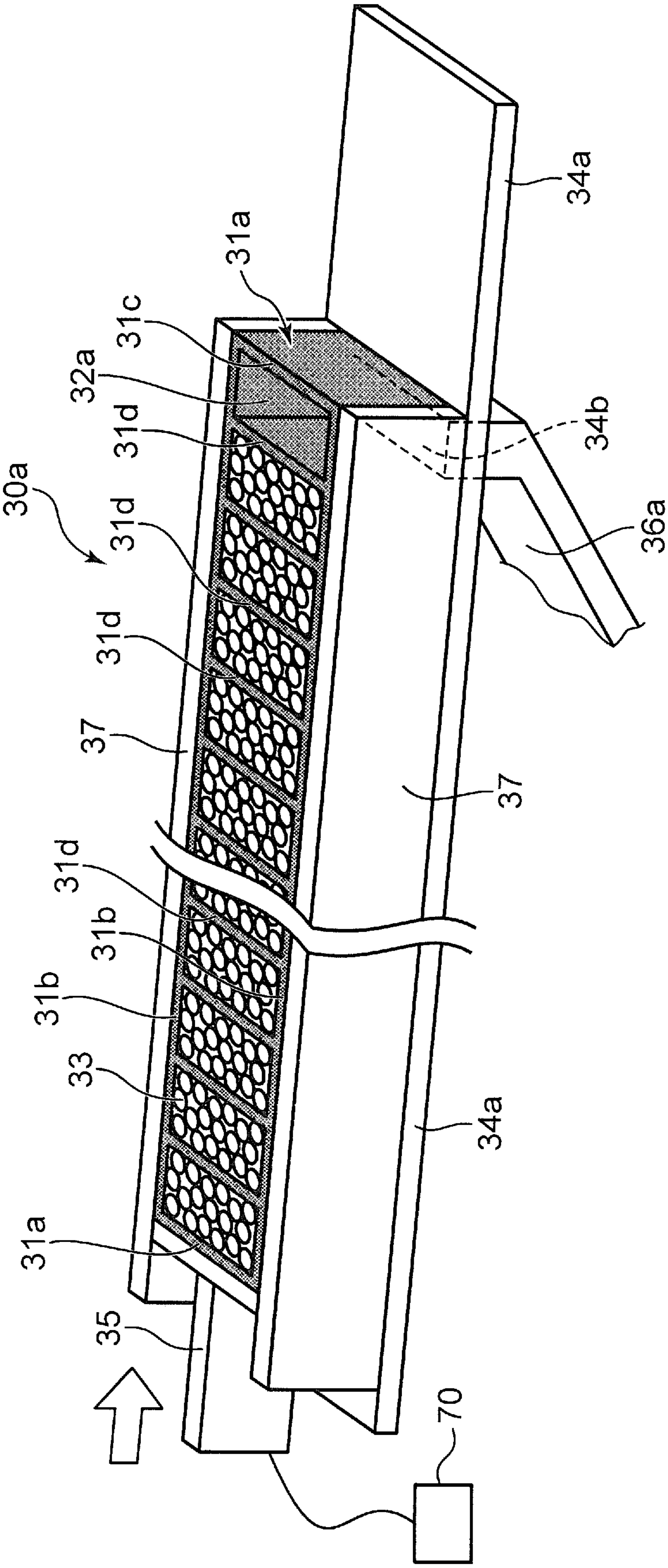

FIG.5

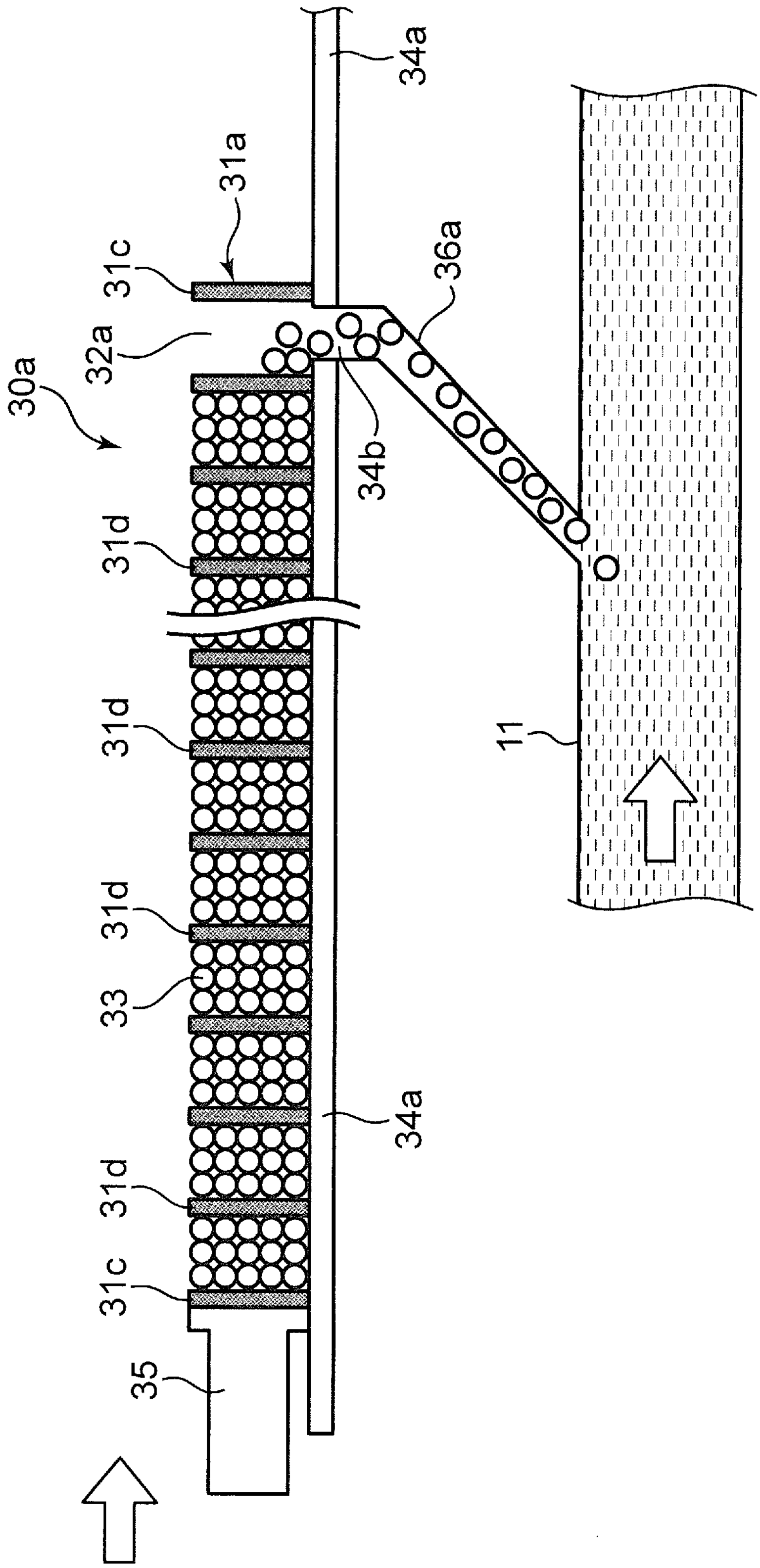

FIG.6

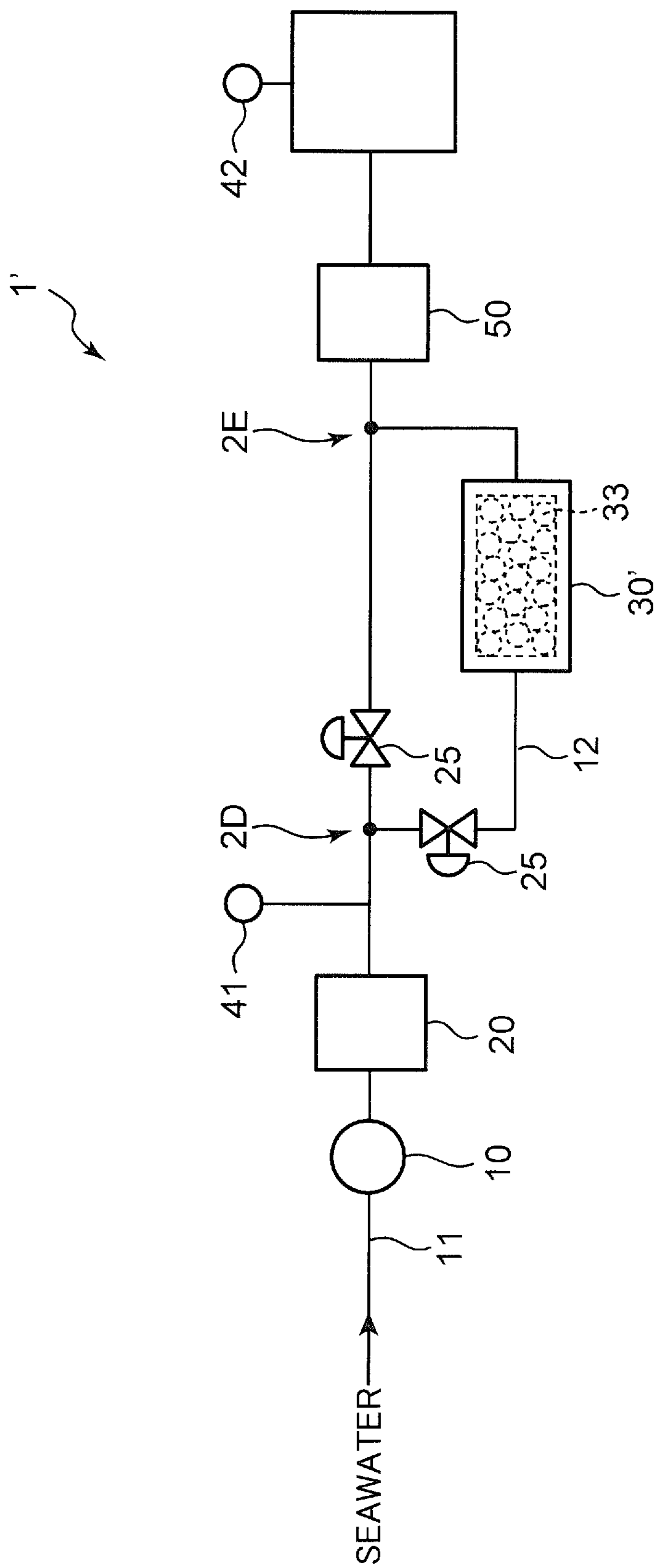

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012254402 A
- JP 2013099969 A
- WO 2012124039 A